# EUROPEAN PATENT APPLICATION

(11) **EP 4 647 917 A1**
(43) Date of publication of application: **12.11.2025**
(21) Application number: 24830365.3
(22) Date of filing: 29.05.2024
(51) Int. Cl.: G06F 9/54, G06F 9/445, G06F 3/0481, G06F 3/0484

(54) **ANIMATION EFFECT DISPLAY METHOD AND ELECTRONIC DEVICE**

(30) Priority: 30.06.2023 CN 202310798033
(71) Applicant: Huawei Technologies Co., Ltd., Shenzhen, Guangdong 518129 (CN)
(72) Inventor: NIU, Dun, Shenzhen, Guangdong 518129 (CN); YE, Rongtang, Shenzhen, Guangdong 518129 (CN); SU, Hongkai, Shenzhen, Guangdong 518129 (CN)
(74) Representative: Isarpatent
(86) International application number: PCT/CN2024/096102
(87) International publication number: WO 2025/001718

(57) **Abstract**

This application provides an animation display method and an electronic device. In this method, a Surface Flinger process can display an animation based on animation information from a System Server process or an application process. It can be learned from this solution that an animation calculation capability of an electronic device is delegated to the Surface Flinger process, so that a quantity of cross-process communication times in an animation display process can be significantly reduced. Because the Surface Flinger process is a resident process at a bottom layer of the electronic device, this solution is different from a conventional solution in that the Surface Flinger process completes an animation calculation process, to reduce a system load of the electronic device and ensure animation display smoothness of the electronic device can be ensured, so that problems of frame freezing, frame drop, and jitter of an animation can be avoided. This improves user experience.

## Description

### CROSS-REFERENCE TO RELATED APPLICATIONS

This application claims priority to Chinese Patent Application No. 202310798033.4, filed with the China National Intellectual Property Administration on June 30, 2023 and entitled "ANIMATION DISPLAY METHOD AND ELECTRONIC DEVICE", which is incorporated herein by reference in its entirety.

### TECHNICAL FIELD

This application relates to the field of electronic device technologies, and in particular, to an animation display method and an electronic device.

### BACKGROUND

To enrich a picture and attract attention of a user, an electronic device may display an animation in a running process. For example, the electronic device may display a window animation when the user opens or closes a window, minimizes or adjusts a window, and performs an operation on a floating window. For another example, when the electronic device jumps from one page to another page or jumps from a user interface (user interface, UI) of one application to a user interface of another application based on an operation of the user, the electronic device may display a transition animation.

To enrich and facilitate life of users, software developers develop a variety of applications (applications, APPs). In addition, as functions of the applications become increasingly powerful, sizes of the applications increase. As a result, when an electronic device runs a plurality of applications, an overload scenario often occurs, further causing problems of frame freezing, frame drop, and jitter of an animation in the electronic device.

### SUMMARY

This application provides an animation display method and an electronic device, to ensure animation display smoothness of an electronic device and avoid problems of frame freezing, frame drop, and jitter of an animation. This improves user experience.

According to a first aspect, an embodiment of this application provides an animation display method. The method may be applied to an electronic device, and the method includes the following steps.

A first process receives animation information from a second process, and the animation information indicates at least one animation operation in an animation. Then, the first process displays the animation based on the animation information, which specifically includes: The first process calculates display data of the at least one animation operation at different moments based on the animation information, and calculates, based on the display data of the at least one animation operation at the different moments, image frame data corresponding to the different moments. The first process composes and displays, based on the image frame data corresponding to the different moments, image frames corresponding to the different moments, to display the animation. The first process is a process that runs a surface flinger (Surface Flinger) of an electronic device, and the second process is a process that runs a system service (System Server) or an application of the electronic device.

According to the method, an animation calculation capability of an electronic device is delegated to the Surface Flinger process, so that a quantity of cross-process communication times in an animation display process can be significantly reduced. For example, the System Server process or the application process may deliver the animation information to the Surface Flinger process through one time of cross-process communication, to complete display of the animation. Because the Surface Flinger process is a resident process at a bottom layer of the electronic device, this solution is different from a conventional solution in that the System Server process or the application process may be prevented from performing an animation calculation process, and the Surface Flinger process completes the animation calculation process, to reduce a system load of the electronic device and ensure animation display smoothness of the electronic device, so that problems of frame freezing, frame drop, and jitter of an animation can be avoided. This improves user experience.

Optionally, the second process may send the animation information to the first process in a cross-process communication manner (such as, an IPC manner or a binder manner).

Optionally, in a process in which the first process displays the animation, each time the first process obtains, through calculation, display data of the at least one animation operation at a moment, the first process calculates, based on the data, image frame data corresponding to the moment, and then composes and displays the image frame corresponding to the moment. In this way, the first process may sequentially calculate image frame data corresponding to different moments, and finally sequentially display image frames in the animation.

In a possible design, each time after receiving an image refresh signal, the first process calculates, based on the animation information, display data of the at least one operation at a current moment, so that the first process may subsequently calculate, based on the display data of the at least one operation at the current moment, image frame data corresponding to the current moment, to compose and display an image frame corresponding to the current moment. For example, the image refresh signal may be a Vsync signal.

According to this design, the Surface Flinger process of the electronic device can complete the calculation process in the animation display process, so that the System Server process or the application process can be prevented from performing the calculation process, to reduce a system load of the electronic device, and avoid a process of transmitting the image frame data in the animation a plurality of times across processes.

In a possible design, the animation information includes related data of the at least one animation operation. Related data of any animation operation includes at least one of the following: a type of the animation operation, a start time of the animation operation, duration of the animation operation, an offset time of the animation operation, interpolator information of the animation operation, or callback information of the animation operation. Based on this, each time after receiving the image refresh signal, the first process may calculate the display data of the at least one animation operation at the current moment based on the related data of the at least one animation operation included in the animation information.

Optionally, the second process may serialize the animation information, and then transmit serialized animation information to the first process. Based on this, before displaying the animation, the first process may first perform deserialization on the serialized animation information, to obtain original animation information.

In a possible design, in a process in which the first process displays the animation, the first process may compose and display, based on the image frame data corresponding to the different moments, the image frames corresponding to the different moments on a layer (Layer) corresponding to the System Server or the application. In this design, the animation can be bound to the layer (Layer) corresponding to the System Server or the application, so that the animation is accurately displayed.

In a possible design, after the first process receives an animation stop instruction from the second process, the first process stops displaying the animation. In other words, the first process stops calculating the display data of the at least one animation operation at the different moments. Optionally, the first process may delete the animation information after stopping displaying the animation.

In a possible design, after the first process receives an animation interrupt instruction from the second process, the first process interrupts display of the animation. In other words, the first process interrupts calculating the display data of the at least one animation operation at the different moments. After the first process receives an animation restart instruction from the second process, the first process continues to display the animation. In other words, the first process continues to calculate the display data of the at least one animation operation at the different moments.

According to the foregoing design, the second process may send the instruction through cross-process communication, to manage an animation status.

In a possible design, in a process in which the second process displays the animation, the second process does not calculate the display data of the at least one animation operation based on the animation information, and the second process does not send the image frame data to the first process.

In this design, the second process can be prevented from performing an animation calculation process in the animation display process, and a quantity of cross-process communication times in the animation display process can be significantly reduced.

According to a second aspect, an embodiment of this application provides an electronic device. The electronic device includes units configured to perform the steps in the method provided in the first aspect. Optionally, the electronic device includes a display and a processing unit, the display is configured to display a user interface, and the processing unit is configured to perform the method provided in the first aspect. Optionally, the electronic device may further include a communication unit. The communication unit is configured to receive and send data.

For example, modules or units that run a Surface Flinger process in the electronic device include a Surface Flinger primary module and an animation management module. The animation management module is used to: receive animation information from a System Server process or an application process, where the animation information indicates at least one animation operation in an animation; calculate, based on the animation information, display data of the at least one animation operation at different moments; and calculate, based on the display data of the at least one animation operation at the different moments, image frame data corresponding to the different moments.

The Surface Flinger primary module is used to compose and display, based on the image frame data corresponding to the different moments, image frames corresponding to the different moments, to display the animation.

According to a third aspect, an embodiment of this application provides an electronic device, the electronic device includes a display, at least one processor, and a memory, the at least one processor is coupled to the memory, and the at least one processor is configured to read a computer program stored in the memory, to perform the method provided in the first aspect. The computer program code includes computer instructions.

According to a fourth aspect, an embodiment of this application provides a chip, the chip includes a processor and a memory, the processor is coupled to the memory, and the processor is configured to invoke, during running, a computer program stored in the memory, to implement the method provided in the first aspect.

According to a fifth aspect, an embodiment of this application provides a computer storage medium, the computer storage medium stores a computer program, and when the computer program is run on an electronic device, the computer is enabled to perform the method provided in the first aspect.

According to a sixth aspect, an embodiment of this application provides a computer program product, the computer program product includes a computer program, and when the computer program is run on a computer, the computer is enabled to perform the method provided in the first aspect.

For technical effects that can be achieved in any one of the second aspect to the sixth aspect, refer to descriptions of technical effects that can be achieved in any one of the possible designs of the first aspect. Details are not described herein again.

### BRIEF DESCRIPTION OF DRAWINGS

FIG. 1 is a diagram of a conventional animation display solution;
FIG. 2 is a diagram of a structure of an electronic device according to an embodiment of this application;
FIG. 3 is a diagram of a layered architecture of a display system according to an embodiment of this application;
FIG. 4 is a diagram of a layered architecture of another display system according to an embodiment of this application;
FIG. 5 is a diagram of a structure of serialized animation information according to an embodiment of this application;
FIG. 6 is a flowchart of an animation display method according to an embodiment of this application;
FIG. 7A is a flowchart of an instance of animation display according to an embodiment of this application;
FIG. 7B is a flowchart of an instance of animation display according to an embodiment of this application;
FIG. 7C-1 to FIG. 7C-5 are a diagram of a transition animation according to an embodiment of this application;

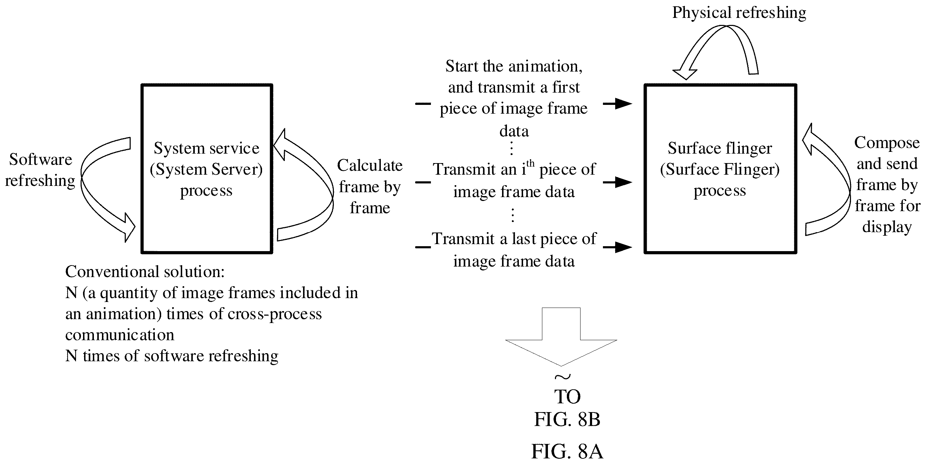

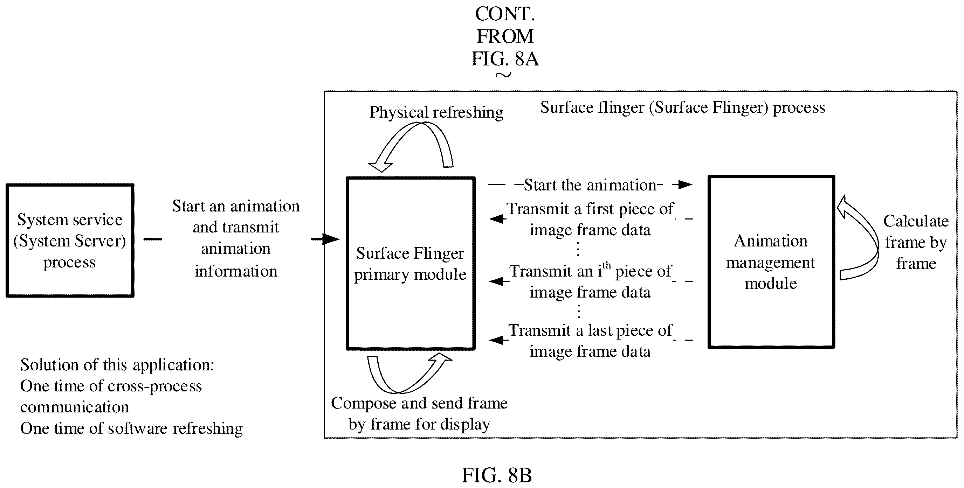

FIG. 8A and FIG. 8B are a diagram of comparison between a conventional animation display solution and an animation display method according to an embodiment of this application; and

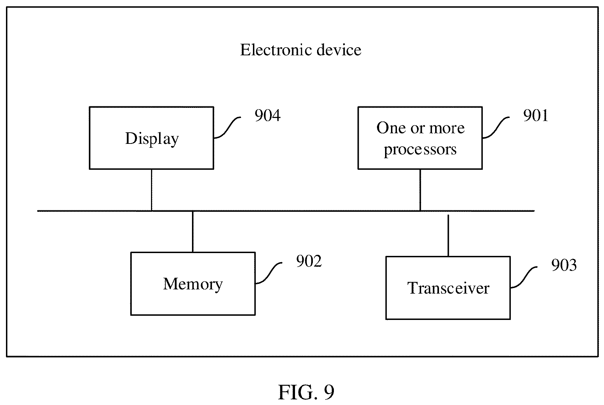

FIG. 9 is a diagram of a structure of an electronic device according to an embodiment of this application.

### DESCRIPTION OF EMBODIMENTS

This application provides an animation display method and an electronic device, to ensure animation display smoothness of an electronic device and avoid problems of frame freezing, frame drop, and jitter of an animation. This improves user experience. The method and the electronic device are based on a same technical concept. Because the method and the electronic device have similar principles for resolving a problem, reference may be mutually made to implementations of the electronic device and the method. Repeated parts are not described again.

In the following, some terms in this application are described, to help a person skilled in the art have a better understanding.
(1) Electronic device: is a device or an apparatus that has a display and can perform image processing and image display functions. Generally, the electronic device has a display.
   For example, the electronic device in this application may be a personal computer (personal computer, PC), a notebook computer, a computer, a netbook, a tablet computer, an in-vehicle computer, a smartphone, an intelligent wearable device (for example, a smartwatch, a smart band, or smart glasses), or the like. Certainly, the electronic device may alternatively be various portable devices, in-vehicle terminal devices, personal digital assistants (personal digital assistants, PDAs), and intelligent devices such as smart home devices (for example, a smart television, and the like). A specific form of the electronic device is not limited in this application.
   The electronic device may implement a function of the electronic device by using a carried operating system, to provide a service for a user. For example, the electronic device may carry, but is not limited to, iOS^{®}, Android^{®}, Microsoft^{®}, HarmonyOS^{®}, or another operating system.
(2) Animation: is an animation process in which the electronic device displays, on the display, that a user interface dynamically changes. The electronic device may display an animation in a running process, to improve experience of interaction between the user interface and a user, so that a picture is richer, and a better visual effect is achieved. The animation may include but is not limited to a window animation, a transition animation, and the like. The following briefly describes the two animations.

The window animation may be an animation generated when the user performs an operation on a window of the electronic device. Optionally, when the user opens, closes, or minimizes the window, or when the user adjusts a window size, or when the user performs an operation on a floating window (or a small window, or a window in a split screen mode), the electronic device may display a corresponding window animation. For example, when the user closes a floating window displayed on a smartphone, the floating window may fly out and disappear. For another example, when the user performs an operation of restoring to a common window on a floating window displayed on a smartphone, the floating window may be gradually enlarged until a size of the floating window becomes a size of the common window.

The transition animation is an animation generated when the user operates a user interface of the electronic device and transition occurs. Optionally, when the electronic device jumps from a page in an application to another page, or jumps from an application to another application, the electronic device may display the transition animation. For example, after the user opens a setting application of a smartphone and selects a mobile network from a home page, the smartphone jumps from the home page (namely, a level-1 page) of the setting application to a level-2 page of the mobile network. For another example, after the user opens an album application of a smartphone, selects a photo, taps a share button, and selects a WeChat^{®} application, the smartphone jumps from a user interface of the album application to a sharing user interface of the WeChat^{®} application.

### (3) Process and thread

A process is a running activity of a program with a specific independent function on a data set. The process is an independent unit for the operating system to allocate and schedule resources. For example, when each app is running, the electronic device starts a process corresponding to the app, for example, a WeChat^{®} process or a Weibo^{®} process. In addition, for a service provided by the operating system, the electronic device also runs a corresponding process, for example, a process that runs a system service (System Server) (referred to as a System Server process for short below) or a process that runs a surface flinger (Surface Flinger) (referred to as a Surface Flinger process for short below).

A thread is an entity in a process, and is a basic unit for scheduling and allocating by the central processing unit (central processing unit, CPU). The thread is a basic unit that is smaller than the process and can run independently. The thread basically does not have system resources of the thread and has only necessary resources (such as a program counter, a register, and a stack) for running and an independent execution sequence. However, the thread can share all resources of the process with another thread in the same process, or share data with another thread in the same process.

A main difference between the process and the thread is that the process and the thread are different resource management manners of an operating system. The process has an independent address space. After the process crashes, the process does not affect another process in a protection mode. Threads are only different execution paths in a process. A thread has a stack and a local variable of the thread, but does not have an independent address space. If one thread goes down, an entire process crashes.

In short, one program has at least one process, and one process may include one or more threads. A division scale of threads is smaller than that of processes. A process has an independent memory unit during execution, and a plurality of threads in a same process need to share a memory.

It should be noted that different processes may communicate with each other, that is, perform cross-process communication. Currently, a cross-process communication manner may include but is not limited to: an inter-process communication (inter-process communication, IPC) manner, a binder manner, and the like.

(4) Surface flinger (Surface Flinger): is an independent service provided by the operating system of the electronic device, mainly implements functions such as surface (Surface) establishment, control, and management, and finally composes an image that needs to be finally displayed on a display, so that the electronic device can display a user interface in real time. As a resident service at a bottom layer of the electronic device, during operation of the electronic device, the Surface Flinger needs to be continuously in an operating state. Therefore, the operating system of the electronic device needs to preferentially allocate a resource to the Surface Flinger (or the Surface Flinger process), to ensure that the Surface Flinger is always ready to perform image composing.

The following also briefly describes related concepts of the Surface Flinger.

A surface (Surface) usually corresponds to a window (Window). The window is concerned with a hierarchy and layout, and is a class defined from a perspective of a designer. The surface (Surface) is considered from an implementation perspective and is a class concerned and considered by an engineer. It should be noted that some surfaces (Surfaces), for example, a Surface View used to display video content output by hardware, are not related to a window (Window), but are created directly by a program.

A layer (Layer) is a basic operation unit for performing image composing by the Surface Flinger. The layer (Layer) is created in the Surface Flinger when an application or a system service (System Server) requests to create a surface (Surface). Therefore, one surface (Surface) corresponds to one layer (Layer).

In conclusion, the application or the system service (System Server) can create at least one surface (Surface). Each surface (Surface) corresponds to one layer (Layer) at the Surface Flinger end.

(5) Application: is used to be installed in the electronic device, and may provide a service for the user after running. The application may also be referred to as an application or application software.

The application may be developed by a manufacturer of the electronic device, or developed by a supplier of the operating system of the electronic device, or developed by a third-party application provider. This is not limited in this application.

For example, the application may include a call application, a camera application, an SMS message application, a chat application, a video application, a music application, an electronic map application, a social application, and the like.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be singular or plural.

In embodiments of this application, descriptions such as "when...", "in a case of...", and "if" all mean that an electronic device performs corresponding processing in a specific objective situation, but do not constitute a limitation on time, do not require that the electronic device has a determining action during implementation, and do not mean another limitation either.

It should be noted that, in this application, "indicate" may include a direct indication and an indirect indication. When a piece of information is described to indicate A, the information may directly indicate A or indirectly indicate A, but it does not mean that the information necessarily carries A. For example, first information indicates first content. The first information may include the first content, or may include a part of the first content or an identifier, an index, or the like of the first content, or may include an algorithm, a calculation parameter, or the like for determining the first content. A manner of "indicating" is not limited in this application.

In this application, "include/including A" may be equivalent to "include/including A information". The A information indicates A.

In addition, it should be understood that, in the descriptions of this application, terms such as "first" and "second" are merely used for distinguishing and description, should not be understood as an indication or implication of relative importance, and should not be understood as an indication or implication of a sequence.

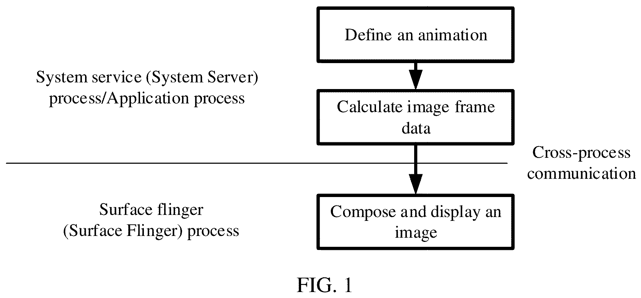

Refer to FIG. 1. Currently, in a conventional animation display solution, a System Server process or an application process in an electronic device is responsible for defining an animation and sequentially calculating image frame data in the animation that needs to be displayed. Then, the System Server process or the application process delivers image frame data obtained through calculation each time to a Surface Flinger process through cross-process communication. The Surface Flinger process composes an image based on the received image frame data, and displays the image on a display. The System Server process or the application process, and the Surface Flinger process in the electronic device cyclically perform the foregoing process of calculating image frame data and composing and displaying an image, to finally implement an animation display process of the electronic device.

It can be learned from the description of the conventional animation display solution that a process of calculating image frame data and a process of composing and displaying in the animation display process are separated and completed by different processes. Therefore, cross-process communication occurs frequently in the process, and once a process (for example, the System Server process or the application process) that needs to display an animation or a thread that is in the process and that is related to display of the animation is not scheduled in a timely manner (for example, in an electronic device overload scenario), a processing delay may be unstable. Further, an unstable factor also exists in a delay of cross-process communication. In conclusion, problems such as frame freezing, frame drop, and jitter may occur on the animation displayed by the electronic device, resulting in poor animation display smoothness of the electronic device.

Further, as a function of an application becomes increasingly powerful, a size of the application increases significantly. A scenario in which the electronic device runs a plurality of applications simultaneously and is overloaded or overloaded also occurs, causing a probability that the foregoing problems occur on the electronic device to increase. Therefore, how to ensure animation display smoothness of the electronic device and avoid problems of frame freezing, frame drop, and jitter of an animation is a problem that needs to be considered by a person skilled in the art.

In view of this, this application provides an animation display method and an electronic device. In this method, a process (referred to as a System Server process or an application process for short) that runs a System Server or an application defines animation information, and sends the animation information to a process (referred to as a Surface Flinger process for short) that runs a Surface Flinger. The Surface Flinger process displays an animation based on the received animation information. It can be learned from this solution that an animation calculation capability of an electronic device is delegated to the Surface Flinger process, so that a quantity of cross-process communication times in an animation display process can be significantly reduced. Because the Surface Flinger process is a resident process at a bottom layer of the electronic device, this solution is different from a conventional solution in that the System Server process or the application process may be prevented from performing an animation calculation process, and the Surface Flinger process completes the animation calculation process, to reduce a system load of the electronic device and ensure animation display smoothness of the electronic device, so that problems of frame freezing, frame drop, and jitter of an animation can be avoided. This improves user experience.

The solutions provided in embodiments of this application are described below in detail with reference to the accompanying drawings.

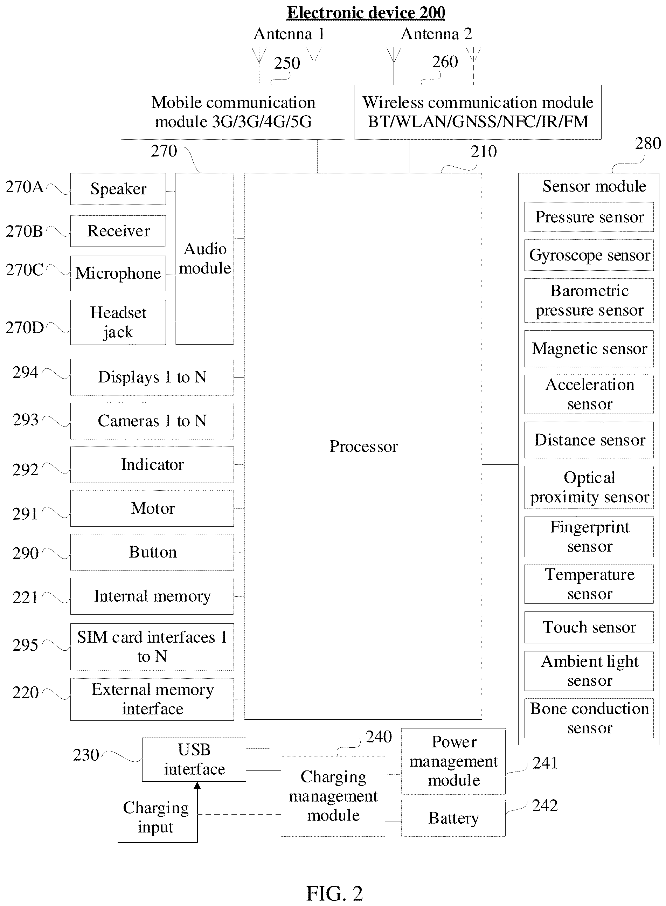

The animation display method provided in embodiments of this application is applicable to an electronic device shown in FIG. 2. Refer to FIG. 2. The following describes a structure of the electronic device provided in this embodiment of this application.

As shown in FIG. 2, the electronic device 200 may include a processor 210, an external memory interface 220, an internal memory 221, a USB interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a SIM card interface 295, and the like.

It may be understood that the electronic device 200 shown in FIG. 2 is merely an example, and does not constitute a limitation on the electronic device. In addition, the electronic device may have more or fewer components than those shown in FIG. 2, or may combine two or more components, or may have different component configurations. The components shown in FIG. 2 may be implemented in hardware, software, or a combination of hardware and software including one or more signal processing and/or application-specific integrated circuits.

The processor 210 may include one or more processing units. For example, the processor 210 may include a central processing unit (central processing unit, CPU), an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. The controller may be a nerve center and a command center of the electronic device 200. The controller may generate an operation control signal based on instruction operation code and a time sequence signal, to complete control of instruction reading and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the instructions or the data may be directly invoked from the memory. The memory is disposed, so that a quantity of times that the processor 210 performs data access on the internal memory 221 can be reduced, and waiting time of the processor 210 is reduced. This improves system efficiency.

The animation display method provided in this embodiment of this application may be controlled by the processor 210 or implemented by invoking another component. For example, a software program stored in the internal memory 221 in this embodiment of this application is invoked, to control implementation of cross-process communication and control the display to display a user interface.

The display 294 is configured to display an image, a video, or the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 294, where N is a positive integer greater than 1. The display 294 may be configured to display information entered by a user or information provided to a user, and various graphical user interfaces (graphical user interfaces, GUI). For example, the display 294 may display a window, a photo, a video, a web page, a file, or the like. In addition, it may be understood that in some embodiments, a status bar may further include a Bluetooth icon, a Wi-Fi icon, an icon of an externally connected device, and the like. In some embodiments, after detecting a touch operation performed by a finger (or a stylus, or the like) of a user on an application icon, the processor 210 opens, in response to the touch operation, a user interface corresponding to the application icon, and displays the user interface on the display 294. In some embodiments, after detecting a tap operation performed by an external input device (such as a mouse or a keyboard) of the electronic device 200 on an application icon, the processor 210 performs, in response to the tap operation, a corresponding control operation on the application.

In this embodiment of this application, the display 294 may be one integrated flexible display, or may be a spliced display including two rigid screens and one flexible screen located between the two rigid screens. After the processor 210 runs the animation display method provided in embodiments of this application, the processor 210 may control the display 294 to display an animation.

The camera 293 is configured to capture a static image or a video. Optionally, the electronic device 200 may include one to N cameras 293. For example, the camera 293 may include a front-facing camera or a rear-facing camera, or one camera 293 may be used as both the front-facing camera and the rear-facing camera. Usually, the camera 293 may include a photosensitive element, for example, a lens group and an image sensor. The lens group includes a plurality of lenses (convex lenses or concave lenses), and is configured to collect an optical signal reflected by a to-be-photographed object, and transfer the collected optical signal to the image sensor. The image sensor generates an original image of the to-be-photographed object based on the optical signal.

The internal memory 221 may be configured to store computer-executable program code. The executable program code includes instructions. The processor 210 runs the instructions stored in the internal memory 221, to perform various functional applications and data processing of the electronic device 200. The internal memory 221 may include a program storage area and a data storage area. The program storage area may store an operating system, program code of at least one application, and the like. The operating system may include but is not limited to iOS^{®}, Android^{®}, Windows^{®}, HarmonyOS^{®}, and the like. The data storage area may store data created during use of the electronic device 200, and the like.

The internal memory 221 may further store one or more computer programs used to perform the animation display method provided in embodiments of this application. The one or more computer programs are stored in the internal memory 221 and are configured to be executed by one or more processors 210. The one or more computer programs include instructions, and the instructions may be used to perform steps in the following embodiments.

In addition, the internal memory 221 may include a high-speed random access memory, or may include a non-volatile memory, for example, at least one magnetic disk storage device, a flash memory, or a universal flash storage (universal flash storage, UFS).

The sensor module 280 may include a fingerprint sensor, a touch sensor, a pressure sensor, a magnetic sensor, an ambient light sensor, a barometric pressure sensor, a bone conduction sensor, and the like.

The touch sensor is also referred to as a "touch panel". The touch sensor may be disposed on the display 294. The touch sensor is configured to detect a touch operation performed on or near the touch sensor. The touch sensor may transfer the detected touch operation to the application processor to determine a type of the touch event. A visual output related to the touch operation may be provided on the display 294. In some other embodiments, the touch sensor may alternatively be disposed on a surface of the electronic device 200, and is at a location different from that of the display 294.

A wireless communication function of the electronic device 200 may be implemented through the antenna 1, the antenna 2, the mobile communication module 250, the wireless communication module 260, the modem processor, the baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that includes 2G/3G/4G/5G or the like and that is applied to the electronic device 200. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert an amplified signal into an electromagnetic wave for radiation through the antenna 1. In some embodiments, at least some functional modules in the mobile communication module 250 may be disposed in the processor 210. In some embodiments, at least some functional modules of the mobile communication module 250 may be disposed in a same device as at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio apparatus (not limited to the speaker 270A, the receiver 270B, or the like), or displays an image or a video on the display 294. In some embodiments, the modem processor may be an independent device. In some other embodiments, the modem processor may be independent of the processor 210, and is disposed in a same device as the mobile communication module 250 or another functional module.

The wireless communication module 260 may provide a wireless communication solution that is applied to the electronic device 200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more devices integrating at least one communication processing module. The wireless communication module 260 receives an electromagnetic wave through the antenna 2, performs frequency modulation and filter processing on the electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2.

The electronic device 200 may implement an audio function such as music playing or recording through the audio module 270, the speaker 270A, the receiver 270B, the microphone 270C, the headset jack 270D, the application processor, and the like. The electronic device 200 may receive an input of the button 290, and generate a button signal input related to a user setting and function control of the electronic device 200. The electronic device 200 may generate a vibration prompt by using the motor 291. The indicator 292 in the electronic device 200 may be an indicator, may be configured to indicate a charging state and a battery level change, and may be further configured to indicate a message, a missed call, a notification, and the like. The SIM card interface 295 in the electronic device 200 is configured to connect to a SIM card. The SIM card may be inserted into the SIM card interface 295 or removed from the SIM card interface 295, to implement contact with or separation from the electronic device 200.

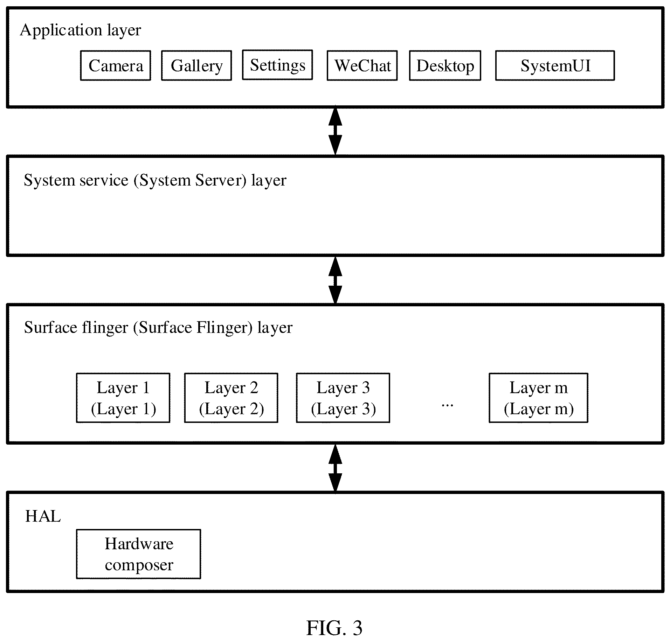

A display system of the electronic device provided in this embodiment of this application may use a layered architecture. In other words, the display system of the electronic device may be divided into a plurality of layers, and each layer has a clear role and task. Layers communicate with each other through corresponding software interfaces. The following describes a display architecture of an electronic device by using an example with reference to FIG. 3.

As shown in FIG. 3, the display system of the electronic device may be divided into four layers: an application layer, a System Server layer, a Surface Flinger layer, and a hardware abstraction layer (hardware abstraction layer, HAL) from top to bottom.

The application layer is a top layer of an operating system, and includes a native application of the operating system and a third-party application, such as Camera, Desktop, systemUI (systemUI), Gallery, Settings, WeChat^{®}, Weibo^{®}, Music, Videos, or Messages.

The System Server layer is an important part of the operating system of the electronic device. The System Server process is an important process in the operating system. A main service, such as a window manager service (WindowManagerServer, WMS), an activity manager service (ActivityManagerService, AMS), or a package manager service (PackageManagerServer) in the system resides in the process. The System Server is responsible for starting services of the system.

The Surface Flinger layer provides a Surface Flinger service. The Surface Flinger is an independent service provided by the operating system of the electronic device, and is a resident service at a bottom layer of the electronic device. During operation and running of the electronic device, the Surface Flinger process needs to be continuously run, and the operating system of the electronic device preferentially allocates a resource to the Surface Flinger process, to ensure that the Surface Flinger process can perform image composing at any time. This ensures that a display function of the electronic device is normal.

The HAL is an interface layer between a kernel of the operating system of the electronic device and a hardware circuit, and is intended to abstract hardware. Optionally, as shown in FIG. 3, the HAL includes a hardware composer (hardware composer, HWC). Hardware composer is mainly responsible for functions such as image composing and image display.

In a starting and running process of an application at the application layer or the System Server at the System Server layer, creation of at least one surface may be requested. The Surface Flinger creates a corresponding layer (Layer) for each surface to bind the application or the System Server to the layer (Layer), so that a user interface of the application or the System Server corresponding to the layer (Layer) is displayed on each layer (Layer).

Based on the layered architecture of the display system shown in FIG. 3, in the conventional animation display solution, the System Server process or the application process may define an animation based on a display requirement in a running process, and sequentially calculate image frame data. Then, the System Server process or the application process delivers, to the Surface Flinger process through cross-process communication, the image frame data obtained through calculation each time. The Surface Flinger process composes, based on the received image frame data, an image in the layer

(Layer) corresponding to the System Server or the application, and finally composes and displays the image through the HWC in the HAL. The System Server process or the application process, and the Surface Flinger process in the electronic device cyclically perform the foregoing process of calculating image frame data and composing and displaying an image, to finally implement an animation display process of the electronic device.

It can be learned from the foregoing analysis of the conventional animation display solution that a calculation process of image frame data is separated from a process of composing and displaying, and consequently cross-process communication occurs frequently. A processing delay of the System Server process or the application process is unstable, a delay of cross-process communication is unstable, and the like, and consequently a probability that problems such as frame freezing, frame drop, and jitter occur on an animation displayed by the electronic device is high. As a result, animation display smoothness of the electronic device may be poor.

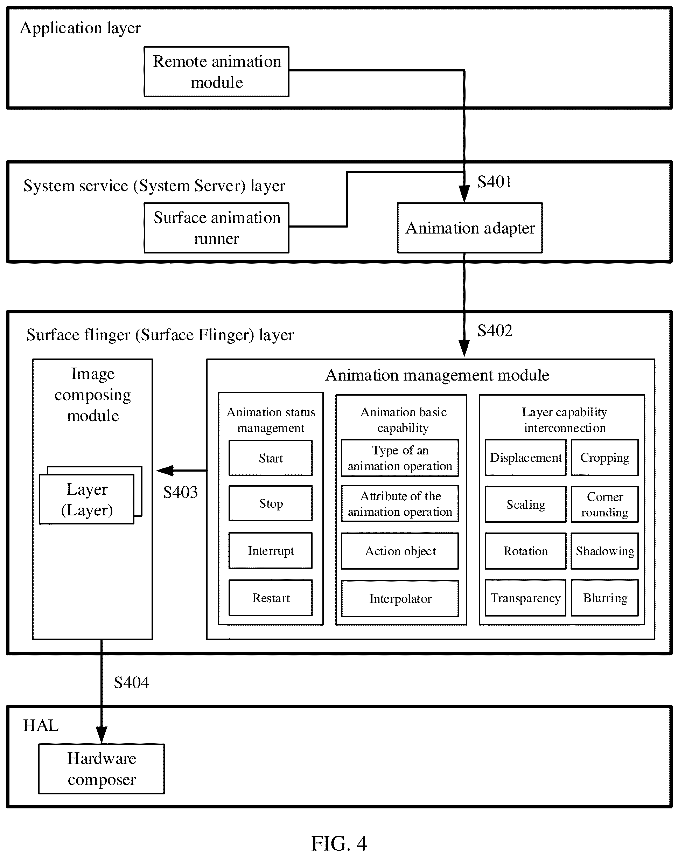

To ensure animation display smoothness of an electronic device and avoid the problems of frame freezing, frame drop, and jitter of an animation, based on the layered architecture of the display system shown in FIG. 3, an embodiment of this application provides an architecture of another display system. Refer to FIG. 4.

As shown in FIG. 4, an application at the application layer may include a remote animation (RemoteAnimation) module. The remote animation module is used to define an animation in a running process of the application, and generate animation information.

The System Server includes a surface animation runner (SurfaceAnimRunner), and the surface animation runner is used to define an animation and generate animation information during running of the System Server. The System Server further includes an animation adapter (AnimationAdaptor), and the animation adapter is mainly responsible for adaptation of various animations defined by the application or the System Server, implementing animation status management, and transparently transmitting the animation information.

The Surface Flinger includes at least an image composing module and an animation management module.

The animation management module is responsible for functions such as animation status management, animation basic capability, and layer capability interconnection. As shown in FIG. 4, the animation management module may start, stop, interrupt, or restart an animation based on an instruction from the animation adapter, and may further control parallel display of a plurality of animations. The animation management module may further perform analysis processing calculation on the animation information from the animation adapter, to determine a type, an attribute, an action object, an interpolator, callback information, and the like of at least one animation operation in an animation that needs to be displayed, thereby calculating image frame data at a current moment based on the foregoing content. As shown in the figure, the type of the animation operation may include but is not limited to a processing operation, such as displacement, cropping, scaling, corner rounding, rotation, shadowing, transparency, or blurring, on a layer (Layer). The attribute of the animation operation may include a display parameter and an operation target parameter of the animation operation. For example, the display parameter of the animation operation may include, but is not limited to, at least one of the following: a start time, duration, an offset time, and the like of the animation operation. The operation target parameter of the animation operation is adaptively set based on the type of the animation operation, for example, a target position or a target offset value of displacement, a target cropping size, a target scaling ratio, a target rotation angle, and a target value of transparency.

Optionally, the animation management module may further perform processing, such as, displacement, scaling, and rotation, corresponding to the type of the animation operation on the layer (Layer).

The image composing module is responsible for a conventional image composing function of the Surface Flinger, and is used to compose, based on image frame data obtained through calculation by the animation management module, an image on a layer (Layer) corresponding to the System Server or the application.

It should be noted that, as an example, this embodiment does not limit a name of a functional module at each layer, and each functional module may alternatively have another name. For example, because the animation management module may bring extreme animation visual experience to a user of the electronic device, the animation management module may also be referred to as an extreme animation core (extreme animation core, EACore) module.

Based on the structure of the display system shown in FIG. 4, an embodiment of this application further provides an animation display method. The following describes a procedure of the method still with reference to FIG. 4.

S401: In an implementation, during a running process of the application process, the remote animation module in the application process may generate animation information, and may send the animation information to the animation adapter in the System Server process through cross-process communication. Optionally, the remote animation module may send, to the animation adapter, an animation start instruction carrying the animation information. In another implementation, during a running process of the System Server process, the surface animation runner in the System Server process may generate animation information, and send the animation information to the animation adapter.

The animation information indicates display content of an animation. For example, the animation information may indicate at least one animation operation in a to-be-displayed animation.

S402: The animation adapter in the System Server process sends the animation information to the Surface Flinger process through cross-process communication. Optionally, the animation adapter may send the animation start instruction carrying the animation information.

Optionally, the animation adapter may directly send the animation information to the animation management module in the Surface Flinger process, as shown in S402 in FIG. 4. Alternatively, the animation adapter may send the animation information to another module in the Surface Flinger process, and the another module forwards the animation information to the animation management module. A specific implementation in which the animation adapter sends the animation information to the Surface Flinger process through cross-process communication is not limited in this embodiment of this application.

S403: After receiving the animation information (or the animation start instruction), the animation management module starts to display an animation; calculates image frame data based on the animation information; and sends calculated image frame data to the image composing module in the same process.

S404: The image composing module performs image composing based on the received image frame to obtain an image frame, and invokes the hardware composer of the HAL to display the image frame. The image composing module may perform image composing on the layer (Layer) corresponding to the System Server or the application, and bind the animation to the layer (Layer) corresponding to the System Server or the application.

The Surface Flinger process may invoke, each time after receiving an image refresh signal (for example, a vertical synchronization (Vsync) signal), the animation management module and the image composing module to calculate image frame data corresponding to a current moment, and compose and display, based on the image frame data, an image frame corresponding to the current moment. The foregoing process is cyclically performed to display the animation.

In an implementation, the animation information may include related data of the at least one animation operation. Related data of any animation operation may include at least one of the following: a type of the animation operation, a start time of the animation operation, duration of the animation operation, an offset time of the animation operation, interpolator information of the animation operation, callback information of the animation operation, or the like.

The animation management module may implement, based on content included in the animation information, functions of animation basic capability management and layer capability interconnection management.

It should be noted that, after the foregoing procedure of starting the animation, the remote animation module or the surface animation runner may further send an animation stop instruction, an animation interrupt instruction, or an animation restart instruction to the animation management module through cross-process communication by using the animation adapter, so that the animation management module may implement, based on an upper-layer instruction, a function of animation status management.

Optionally, in the foregoing procedure, when sending the animation information, the remote animation module, the surface animation runner, or the animation adapter may serialize the animation information, to improve transmission efficiency of the animation information. Based on this, after receiving a serialized animation information, the animation management module may first perform deserialization on the serialized animation information to obtain original animation information. Alternatively, after receiving a serialized animation information from the animation adapter in the Surface Flinger process, another module may first perform deserialization on the serialized animation information to obtain original animation information, and then send the original animation information to the animation management module in the same process.

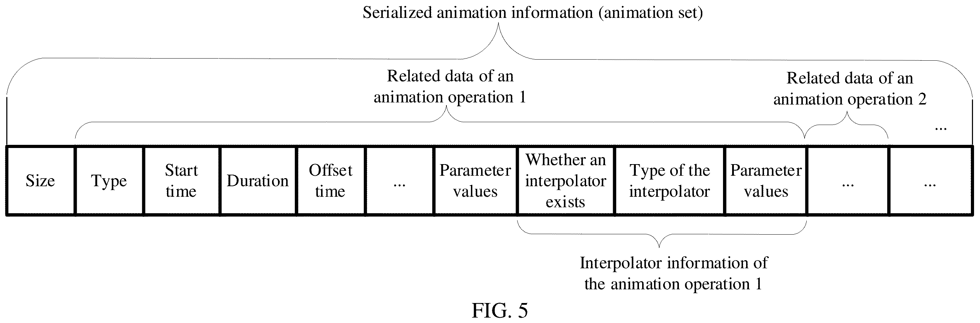

For example, as shown in FIG. 5, the serialized animation information (namely, an animation set) may include a size (Size, namely, a quantity of animation operations included in the animation that needs to be displayed) of the animation set and serialized related data of at least one animation operation. Related data of an animation operation 1 is used for description. The related data of the animation operation 1 may include but is not limited to parameters such as a type (Type) of the animation operation 1, a start time (StartTime) of the animation operation 1, duration (duration) of the animation operation 1, and an offset time (Offset) of the animation operation 1, values (factors) of the foregoing parameters, and interpolator (Interpolator) information of the animation operation 1. As shown in FIG. 5, the interpolator information of the animation operation 1 includes: whether the animation operation 1 has an interpolator, and a type of the interpolator and parameter values in the interpolator information when the animation operation 1 has the interpolator.

It should be further noted that the image composing module and the animation management module in the Surface Flinger process may be located in a same thread, or may be located in different threads in the Surface Flinger process. This is not limited in this application.

According to the layered structure of the display system and the animation display method provided in the embodiment shown in FIG. 4, the System Server process or the application process may define the animation information and send the animation information to the Surface Flinger process. The Surface Flinger process displays an animation based on the received animation information. It can be learned from this solution that an animation calculation capability of the electronic device is delegated to the Surface Flinger process, so that a quantity of cross-process communication times in an animation display process can be significantly reduced. For example, in the procedure shown in S401 to S404, the System Server process or the application process may deliver the animation information to the Surface Flinger process through one time of cross-process communication, to complete display of the animation. Because the Surface Flinger process is a resident process at a bottom layer of the electronic device, this solution is different from a conventional solution in that the Surface Flinger process completes an animation calculation process, to reduce a system load of the electronic device and ensure animation display smoothness of the electronic device, so that problems of frame freezing, frame drop, and jitter of an animation can be avoided. This improves user experience.

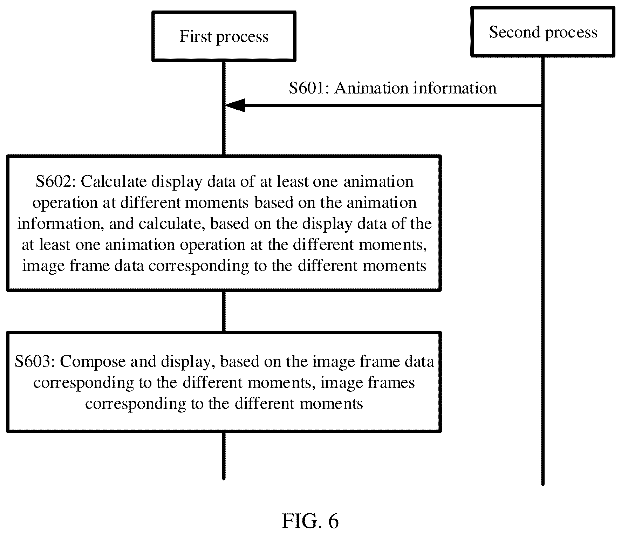

Based on a same technical concept, an embodiment of this application provides an animation display method, to ensure animation display smoothness of an electronic device and avoid problems of frame freezing, frame drop, and jitter of an animation. The following describes, with reference to a flowchart shown in FIG. 6, the method provided in this embodiment of this application.

A first process in this embodiment of this application is a process that runs a Surface Flinger of the electronic device, namely, a Surface Flinger process. A second process is a process that runs a system service System Server or an application of the electronic device, namely, a System Server process or an application process.

S601: During a running process, the second process defines an animation based on a display requirement to generate animation information. The second process may send the animation information to the first process through cross-process communication. The first process receives the animation information from the second process. The animation information indicates display content of the animation. For example, the animation information indicates at least one animation operation in the to-be-displayed animation.

Optionally, in an actual application scenario, the second process may generate the animation information based on, but is not limited to, at least one of a software design of the system service System Server or the application, an operation performed by a user, or a running status of the system service System Server or the application.

For example, the second process may send the animation information to the first process in, but is not limited to, a cross-process communication manner such as an IPC manner or a binder manner.

Optionally, in S601, the second process may send the animation information and an animation start instruction to the first process, or the second process may send, to the first process, an animation start instruction carrying the animation information, so that the first process may start to display the animation based on the animation start instruction.

S602: The first process calculates display data of the at least one animation operation at different moments based on the animation information, and calculates, based on the display data of the at least one animation operation at the different moments, image frame data corresponding to the different moments.

In an implementation, each time after receiving an image refresh signal, the first process calculates, based on the animation information, display data of the at least one animation operation at a current moment, so that the first process may subsequently calculate, based on the display data of the at least one operation at the current moment, image frame data corresponding to the current moment, to compose and display an image frame corresponding to the current moment. For example, the image refresh signal may be a hardware signal sent by hardware in the HAL, for example, a Vsync signal.

Optionally, the animation information may include related data of the at least one animation operation. Related data of any animation operation includes at least one of the following: a type of the animation operation, a start time of the animation operation, duration of the animation operation, an offset time of the animation operation, interpolator information of the animation operation, or callback information of the animation operation.

Based on this, each time after receiving the image refresh signal, the first process may calculate the display data of the at least one animation operation at the current moment based on the related data of the at least one animation operation included in the animation information.

Optionally, when sending the animation information, the second process may serialize the animation information, as shown in FIG. 5. Therefore, before performing S602, the first process further needs to perform deserialization on serialized animation information, to obtain original animation information.

S603: The first process composes and displays, based on the image frame data corresponding to the different moments, image frames corresponding to the different moments, to display the animation.

In this embodiment of this application, each time after obtaining image frame data corresponding to one moment, the first process may compose and display, based on the image frame data corresponding to the moment, an image frame corresponding to the moment. In this way, the first process cyclically performs S602 and S603, to display the animation. A first moment is used as an example for description. In an implementation, after obtaining, through calculation, image frame data corresponding to the first moment, the first process may compose and display, based on the image frame data corresponding to the first moment, an image frame corresponding to the first moment.

It should also be noted that when the first process performs S603, the first process may compose and display, based on image frame data corresponding to each moment, an image frame corresponding to the moment on a layer (Layer) corresponding to the System Server or the application. In this manner, the first process may bind the animation to the layer (Layer) corresponding to the System Server or the application.

It should be noted that, in a process in which the first process displays the animation in S602 and S603, the second process does not calculate, based on the animation information, the display data of the at least one animation operation at the different moments (and does not calculate the image frame data corresponding to the different moments), and does not send the image frame data to the first process.

Optionally, after S603, the second process may further send an instruction to the first process through cross-process communication, to manage an animation status, as shown in the following several implementations.

Implementation 1: The second process sends an animation stop instruction to the first process; and after the first process receives the animation stop instruction from the second process, the first process stops displaying the animation. In other words, the first process stops performing S602 and S603. Optionally, after stopping displaying the animation, the first process may further delete the animation information received in S601.

Implementation 2: The second process sends an animation interrupt instruction to the first process; and after the first process receives the animation interrupt instruction from the second process, the first process interrupts display of the animation. In other words, the first process interrupts performing of S602 and S603. The second process may further send an animation restart instruction to the first process. After the first process receives the animation restart instruction from the second process, the first process may continue to display the animation. In other words, the first process continues to perform S602 and S603.

An embodiment of this application provides an animation display method. In this method, the System Server process or the application process may define animation information and send the animation information to the Surface Flinger process. The Surface Flinger process displays an animation based on the received animation information. It can be learned from this solution that an animation calculation capability of the electronic device is delegated to the Surface Flinger process, so that a quantity of cross-process communication times in an animation display process can be significantly reduced. For example, in the foregoing procedure, the System Server process or the application process may deliver the animation information to the Surface Flinger process through one time of cross-process communication, to complete display of the animation. Because the Surface Flinger process is a resident process at a bottom layer of the electronic device, this solution is different from a conventional solution in that the Surface Flinger process completes an animation calculation process, to reduce a system load of the electronic device and ensure animation display smoothness of the electronic device, so that problems of frame freezing, frame drop, and jitter of an animation can be avoided. This improves user experience.

Based on the animation display method provided in the foregoing embodiments, this application further provides an animation display instance. The following describes the instance with reference to the accompanying drawings.

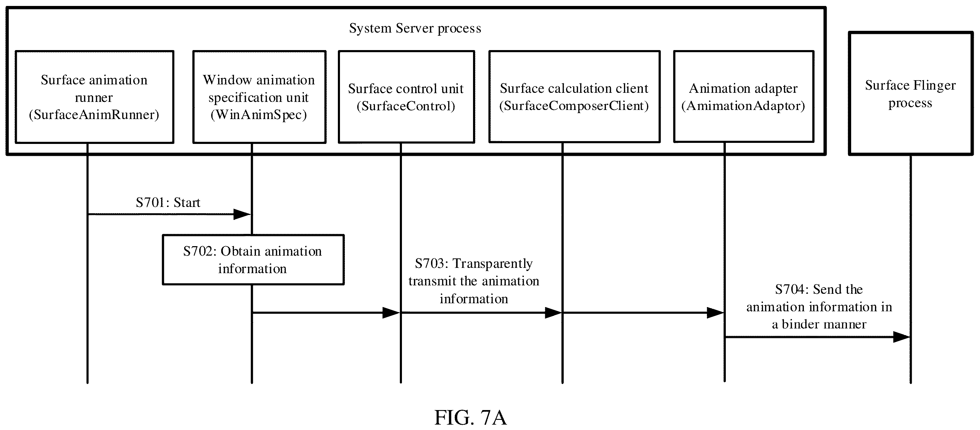

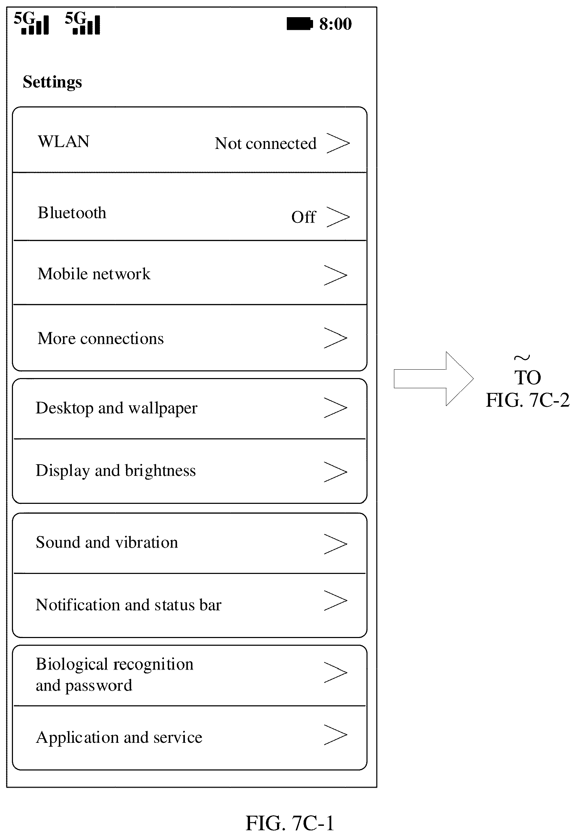

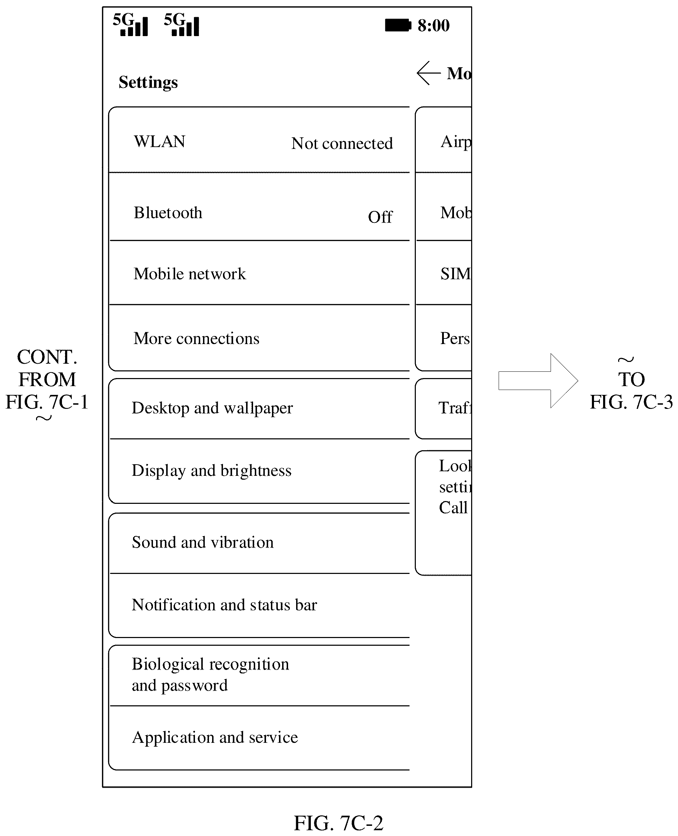

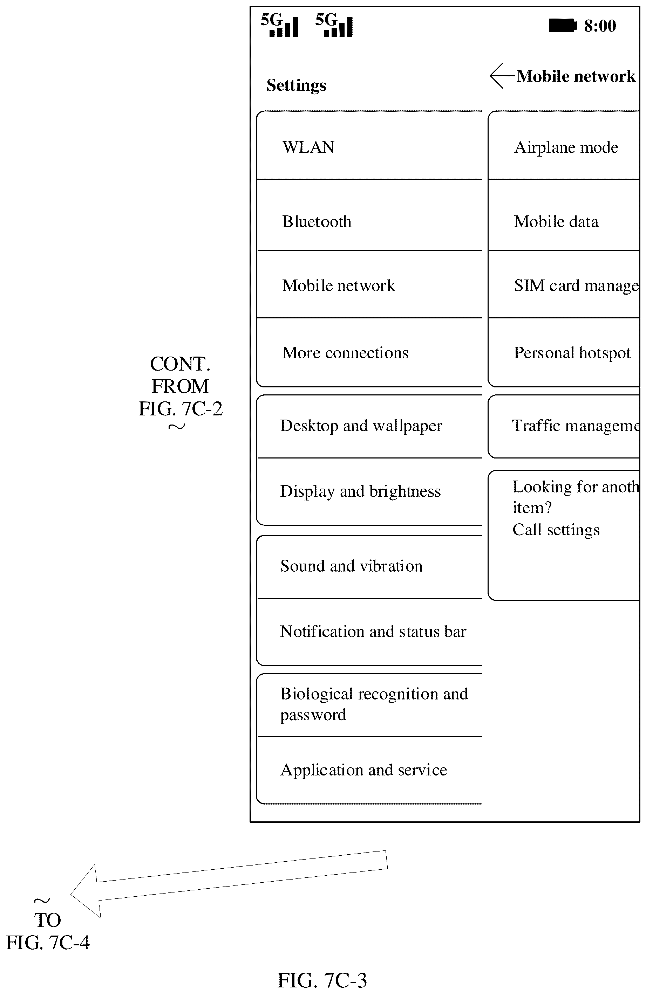

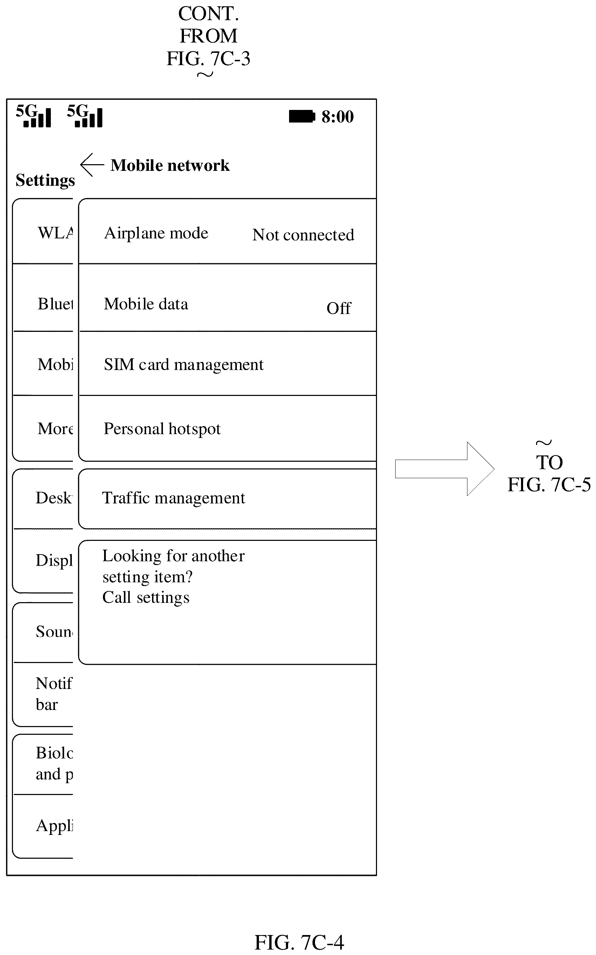

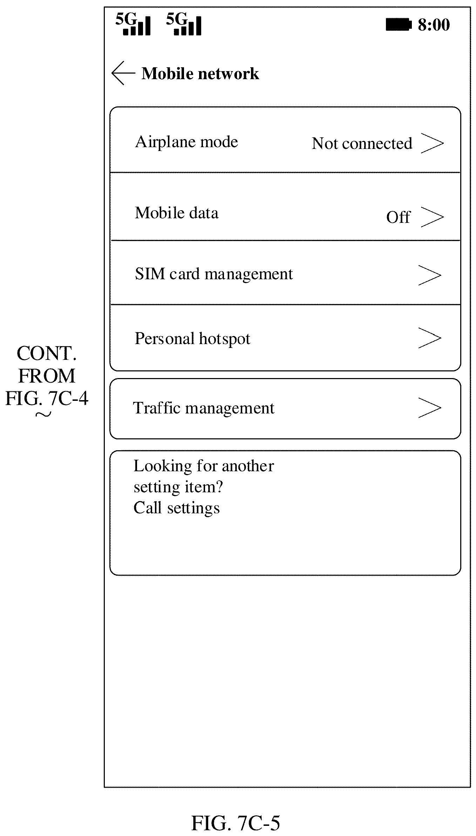

As shown in FIG. 7A, the System Server process may deliver animation information to the Surface Flinger process in the following procedure.

S701: When a transition animation needs to be displayed in a running process of the System Server process, an animation start indication may be sent to a window animation specification unit (WinAnimSpec) by using the surface animation runner (SurfaceAnimRunner).

S702: After receiving the animation start indication, the window animation specification unit (WinAnimSpec) obtains animation information based on a specified window animation specification.

Optionally, the window animation specification unit (WinAnimSpec) may serialize an obtained animation. For a specific process, refer to the description in the embodiment shown in FIG. 4 or FIG. 6. Details are not described herein again.

S703: The window animation specification unit (WinAnimSpec) transparently transmits the animation information to the animation adapter (AnimationAdaptor) by using a surface control unit (SurfaceControl) and a surface calculation client (SurfaceComposerClient).

S704: The animation adapter (AnimationAdaptor) transmits the animation information to the Surface Flinger process in a binder manner.

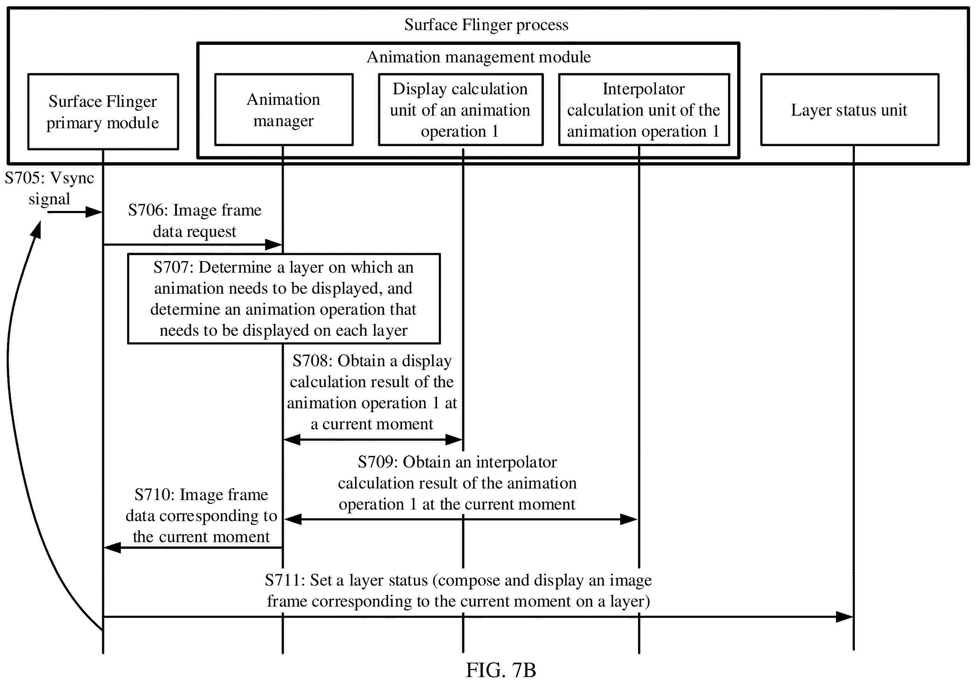

Based on a functional module division manner in the Surface Flinger process shown in FIG. 7B, optionally, the Surface Flinger primary module in the Surface Flinger process may receive the animation information in S704, and may send the animation information to an animation manager in the animation management module, and the animation manager performs subsequent calculation processing; or the animation manager in the Surface Flinger process may directly receive the animation information from the animation adapter in the System Server process in S704.

Then, as shown in FIG. 7B, the Surface Flinger process may display an animation in the following procedure.

S705: The Surface Flinger primary module in the Surface Flinger process receives a Vsync signal from hardware.

The Surface Flinger primary module is responsible for main functions of the Surface Flinger, including composing and displaying an image frame. For example, the Surface Flinger primary module and a layer status unit may be included in the image composing module of the Surface Flinger layer in the architecture of the display system shown in FIG. 4.

S706: The Surface Flinger primary module sends an image frame data request to the animation manager in the animation management module, to request the animation manager to return image frame data corresponding to a current moment.

S707: The animation manager retrieves all layers (Layers) in the current Surface Flinger, and determines a layer (Layer) on which the animation needs to be displayed. In other words, the animation manager may determine at least one layer (Layer) bound to at least one piece of animation information that is received. In this instance, an example in which the layer (Layer) on which the animation needs to be displayed is a layer (Layer), namely a Layer 1, corresponding to the System Server is used for description. The animation manager determines, based on the received animation information, an animation operation (namely, at least one animation operation included in the animation information) that needs to be displayed on the Layer 1. In this instance, an example in which the animation information includes an animation operation 1 is used for description.

S708: The animation manager obtains, from a display calculation unit of the animation operation 1, a display calculation result of the animation operation 1 at the current moment.

The display calculation unit of the animation operation 1 may calculate the display calculation result of the animation operation 1 at the current moment based on related data of the animation operation 1 except interpolator information and callback information in the animation information.

S709: The animation manager obtains, from an interpolator calculation unit of the animation operation 1, an interpolator calculation result of the animation operation 1 at the current moment.

The interpolator calculation unit of the animation operation 1 may calculate the interpolator calculation result of the animation operation 1 at the current moment based on the interpolator information in the related data of the animation operation 1 in the animation information.

S710: Display data of the animation operation 1 at the current moment includes: the display calculation result that is of the animation operation 1 at the current moment and that is obtained in S708, and the interpolator calculation result that is of the animation operation 1 at the current moment and that is obtained in S709. The animation manager may calculate, based on the display data of the animation operation 1 at the current moment, image frame data corresponding to the Layer 1 at the current moment, and return, to the Surface Flinger primary module, the image frame data corresponding to the Layer 1 at the current moment.

S711: The Surface Flinger primary module may invoke the layer status unit to set a layer status of the Layer 1 based on the image frame data corresponding to the Layer 1 at the current moment. In other words, the Surface Flinger primary module composes and displays, based on the image frame data corresponding to the Layer 1 at the current moment, a currently corresponding image frame on the Layer 1.

Because the Vsync signal is sent based on a Vsync cycle, the Surface Flinger process may cyclically perform the foregoing process based on the Vsync cycle, as shown in FIG. 7B, to complete display of the transition animation of the System Server.

It should be noted that the procedures shown in FIG. 7A and FIG. 7B are used as instances, and do not constitute any limitation on the method provided in this application. Each unit or module in the foregoing procedure may invoke a related function, class, function body, or the like to complete implementation of a related step. In addition, the foregoing procedure does not constitute any limitation on division of units or modules in the System Server process or the Surface Flinger. According to function logic division, a specific unit or module may alternatively be divided into a plurality of subunits, or a plurality of units or modules may be coupled to one unit or module.

After going through the procedures shown in FIG. 7A and FIG. 7B, the electronic device may display a transition animation of the System Server, as shown in FIG. 7C-1 to FIG. 7C-5. In other words, a home page of a setting application is gradually covered by a level-2 page of a mobile network flying out from a right side.

FIG. 8A and FIG. 8B are a diagram of comparison between a conventional solution and the solution provided in this application. A black solid line represents cross-process communication, and a black dashed line represents intra-process communication. In the conventional animation display solution, the System Server process needs to continuously perform software refreshing, calculate each piece of image frame data in the animation frame by frame, and sequentially send each piece of calculated image frame data to the Surface Flinger process. The Surface Flinger process then composes, based on a physical refresh signal, and sends each image frame frame by frame for display. However, according to the animation solution provided in this application, the System Server process only needs to deliver defined animation information to the Surface Flinger process. The Surface Flinger primary module in the Surface Flinger process indicates, based on the physical refresh signal, the animation management module to calculate each piece of image frame data in the animation frame by frame. The Surface Flinger primary module composes, based on received image frame data, and sends each image frame frame by frame for display. As shown in FIG. 8A and FIG. 8B, the solution of this application is different from a conventional solution in that a quantity of cross-process communication times is reduced from n to 1, and a quantity of software refresh times of the System Server process is also reduced from n to 1. Because the Surface Flinger process is a resident process at a bottom layer of the electronic device, it is clear that this solution is different from a conventional solution in that the Surface Flinger process completes an animation calculation process, to reduce a system load of the electronic device and ensure animation display smoothness of the electronic device, so that problems of frame freezing, frame drop, and jitter of an animation can be avoided. This improves user experience.

It should be further noted that each step in the foregoing embodiments may be performed by the electronic device, or may be performed by a component such as a chip, a processor, or a chip system in the device. This is not limited in embodiments of this application. In addition, specific implementations or examples in the foregoing embodiments constitute no limitation on the solutions provided in embodiments of this application.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall all fall within the protection scope of this application.

It should be noted that the "step" in embodiments of this application is merely an example, and is a representation method used for better understanding of embodiments, and does not constitute a substantive limitation on performing of the solutions in this application. For example, the "step" may alternatively be understood as a "feature". In addition, the step does not constitute any limitation on an execution sequence of the solutions in this application, and a new technical solution formed through an operation, such as step sequence change, step combination, or step splitting, performed on this basis without affecting implementation of the overall solutions also falls within the scope disclosed in this application.

Based on a same concept, an embodiment of this application further provides an electronic device. As shown in FIG. 9, the electronic device includes one or more processors 901, a memory 902, a transceiver 903, and a display 904. For example, the foregoing devices may be connected through one or more communication buses. One or more computer programs are stored in the memory 902 and are configured to be executed by the processor 901. The one or more computer programs include instructions, and the instructions may be used to enable the electronic device to perform the steps of the methods in the foregoing embodiments.

For example, the processor 901 may be specifically the processor 210 shown in FIG. 2. The memory 902 may be specifically the internal memory 221 shown in FIG. 2 and/or an external memory connected to the electronic device. The transceiver 903 may be the mobile communication module 250 and/or the wireless communication module 260 shown in FIG. 2. The display 904 may be specifically the display 294 shown in FIG. 2. This is not limited in this embodiment of this application.

Based on a same concept, an embodiment of this application further provides an electronic device. The electronic device includes units configured to perform the steps in the method provided in the foregoing embodiments. Optionally, the electronic device may include a display and a processing unit. Optionally, the electronic device may further include a communication unit. The display is configured to display a user interface. The communication unit is configured to receive and send data. The processing unit is configured to perform the method provided in the foregoing embodiments.

For another example, modules or units that run a Surface Flinger process in the electronic device include a Surface Flinger primary module and an animation management module. Main functions of each module are as follows.

The animation management module is used to: receive animation information from a System Server process or an application process, where the animation information indicates at least one animation operation in an animation; calculate, based on the animation information, display data of the at least one animation operation at different moments; and calculate, based on the display data of the at least one animation operation at the different moments, image frame data corresponding to the different moments.

The Surface Flinger primary module is used to compose and display, based on the image frame data corresponding to the different moments, image frames corresponding to the different moments, to display the animation.

For specific functions of the foregoing modules, refer to the foregoing embodiments. Details are not described herein again.

Based on the foregoing embodiments, an embodiment of this application further provides a computer program product. The computer program product includes a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

Optionally, the computer may include but is not limited to an electronic device.

The storage medium may be any available medium that can be accessed by a computer. The following provides an example but does not impose a limitation: The computer-readable medium may include a RAM, a ROM, an EEPROM, a CD-ROM, another optical disc storage or magnetic disk storage medium, another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the method provided in the foregoing embodiments. Optionally, the chip may include a processor and a memory. The processor is coupled to the memory, and configured to read a computer program stored in the memory, to implement the method provided in the foregoing embodiments.

Based on the foregoing embodiments, an embodiment of this application provides a chip system. The chip system includes a processor configured to support a computer apparatus in implementing functions related to the electronic device in the foregoing embodiments. In a possible design, the chip system further includes a memory, and the memory is configured to store a program and data that are necessary for the computer apparatus. The chip system may include a chip, or may include a chip and another discrete device.

In conclusion, embodiments of this application provide an animation display method and an electronic device. In this method, a process (referred to as a System Server process or an application process for short) that runs a System Server or an application defines animation information, and sends the animation information to a process (referred to as a Surface Flinger process for short) that runs a Surface Flinger. The Surface Flinger process displays an animation based on the received animation information. It can be learned from this solution that an animation calculation capability of an electronic device is delegated to the Surface Flinger process, so that a quantity of cross-process communication times in an animation display process can be significantly reduced. Because the Surface Flinger process is a resident process at a bottom layer of the electronic device, this solution is different from a conventional solution in that the Surface Flinger process completes an animation calculation process, to reduce a system load of the electronic device and ensure animation display smoothness of the electronic device, so that problems of frame freezing, frame drop, and jitter of an animation can be avoided. This improves user experience.

According to the context, the term "when" or "after" used in the foregoing embodiments may be interpreted as a meaning of "if" or "after" or "in response to determining" or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive Solid State Disk (SSD)), or the like. In a case in which no conflict occurs, the solutions in the foregoing embodiments may be combined for use.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. An animation display method, comprising:
receiving, by a first process, animation information from a second process, wherein the first process is a process that runs a surface flinger Surface Flinger of an electronic device, the second process is a process that runs a system service System Server or an application of the electronic device, and the animation information indicates at least one animation operation in an animation;
calculating, by the first process, display data of the at least one animation operation at different moments based on the animation information, and calculating, based on the display data of the at least one animation operation at the different moments, image frame data corresponding to the different moments; and
composing and displaying, by the first process based on the image frame data corresponding to the different moments, image frames corresponding to the different moments, to display the animation.

2. The method according to claim 1, wherein calculating, by the first process, the display data of the at least one animation operation at the different moments based on the animation information comprises:
calculating, by the first process each time after receiving an image refresh signal, display data of the at least one animation operation at a current moment based on the animation information.

3. The method according to claim 2, wherein the image refresh signal is a vertical synchronization Vsync signal.

4. The method according to any one of claims 1 to 3, wherein the animation information comprises related data of the at least one animation operation; and
related data of any animation operation comprises at least one of the following: a type of the animation operation, a start time of the animation operation, duration of the animation operation, an offset time of the animation operation, interpolator information of the animation operation, or callback information of the animation operation.

5. The method according to any one of claims 1 to 4, wherein composing and displaying, by the first process based on the image frame data corresponding to the different moments, the image frames corresponding to the different moments comprises:
composing and displaying, by the first process based on the image frame data corresponding to the different moments, the image frames corresponding to the different moments on a layer Layer corresponding to the System Server or the application.

6. The method according to any one of claims 1 to 5, wherein in a process in which the first process displays the animation, the second process does not calculate the display data of the at least one animation operation based on the animation information, and the second process does not send the image frame data to the first process.

7. The method according to any one of claims 1 to 6, wherein the method further comprises:
after the first process receives an animation stop instruction from the second process, stopping, by the first process, calculating the display data of the at least one animation operation at the different moments, to stop displaying the animation.

8. The method according to any one of claims 1 to 7, wherein the method further comprises:
after the first process receives an animation interrupt instruction from the second process, interrupting, by the first process, calculating the display data of the at least one animation operation at the different moments, to interrupt display of the animation; and
after the first process receives an animation restart instruction from the second process, continuing to calculate, by the first process, the display data of the at least one animation operation at the different moments, to continue to display the animation.

9. An electronic device, wherein the electronic device comprises a display, a memory, and one or more processors; and
the memory is configured to store computer program code, the computer program code comprises computer instructions, and when the computer instructions are executed by the one or more processors, the electronic device is enabled to perform the method according to any one of claims 1 to 8.

10. A computer-readable storage medium, wherein the computer-readable storage medium stores a computer program, and when the computer program is run on a computer, the computer is enabled to perform the method according to any one of claims 1 to 8.

11. A computer program product, wherein the computer program product comprises a computer program or instructions; and when the computer program or the instructions are run on a computer, the computer is enabled to perform the method according to any one of claims 1 to 8.

12. A chip, comprising a processor and a memory, wherein the processor is coupled to the memory, and the processor is configured to invoke, during running, a computer program stored in the memory, to implement the method according to any one of claims 1 to 8.
